Europäisches Patentamt

**European Patent Office**

Office européen des brevets

(19)

(11) Numéro de publication: **0 036 366**

**A1**

(12) # DEMANDE DE BREVET EUROPEEN

(21) Numéro de dépôt: **81400388.5**

(22) Date de dépôt: **13.03.81**

(51) Int. Cl.³: **G 01 S 15/88**
**G 01 S 15/58**

(30) Priorité: **14.03.80 FR 8005836**

(43) Date de publication de la demande:
**23.09.81 Bulletin 81/38**

(84) Etats contractants désignés:
**AT BE CH DE FR GB IT LI LU NL SE**

(71) Demandeur: **BERTIN & CIE**
**Boîte Postale No. 3**
**F-78370 Plaisir(FR)**

(72) Inventeur: **Fage, Jean-Michel**
**51, rue Saint-Louis en l'Ile**
**F-75004 Paris(FR)**

(74) Mandataire: **de Boisse, Louis**
**37, Avenue Franklin D. Roosevelt**
**F-75008 Paris(FR)**

(54) **Système de traitement d'un signal acoustique de télédétection de vitesse du vent.**

(57) Système de mesure à distance des vitesses relatives au sein d'un fluide en mouvement, en particulier de l'eau et de l'air et comportant:
- une émission de trains d'ondes acoustiques selon au moins une direction déterminée
- une réception des ondes diffusées en particulier par la turbulence à distance le l'émission
- une mesure de la fréquence des ondes reçues
- une détermination du glissement de fréquence, égal à la différence des fréquences émises et reçues
- une évaluation de la composante de vitesse du fluide par la formule de DOPPLER.
   La détermination de la valeur de la composante Doppler réelle est effectuée par une mesure de fréquence globale dans une bande passante dite "de travail" sensiblement centrée sur la fréquence d'émission et par une estimation simultanée du rapport entre les puissances du bruit de fond et du signal utile captés, ce qui permet de corriger cette mesure globale.

./...

Croydon Printing Company Ltd

Fig. 3

- 1 -

<u>Système de traitement d'un signal acoustique de</u>
<u>télédétection de vitesse du vent.</u>

La présente invention concerne un système de mesure
de vitesse d'un fluide dans les trois directions de
l'espace à partir de phénomènes turbulents et en particulier dans l'air et dans l'eau. Elle peut s'appliquer à tout système de télédétection acoustique et en
particulier dans les buts d'études météorologiques et
de surveillance des pollutions atmosphériques et dans
les buts d'études océanographiques.

Le principe d'une telle mesure est connu : il consiste
à émettre un train d'ondes sonores, à une fréquence
donnée; ce signal émis, est diffusé à distance par la
turbulence thermique à petite échelle et une faible
partie de l'onde diffusée est renvoyée en direction du
récepteur. Cette turbulence est transportée par le
fluide de telle sorte que le signal diffusé est affecté
de la variation apparente de fréquence, dite effet
Doppler, qui correspond à la vitesse du fluide dans la
zone diffusante.

L'émission est réalisée par une antenne directive généralement du type parabolique, au foyer de laquelle est
situé un générateur d'ondes sonores. La réception est
réalisée par le même type d'antenne, le signal diffusé étant capté par un transducteur quelconque, tel qu'un microphone, situé au voisinage du foyer de l'antenne.

Parmi les stations mettant en oeuvre ce principe on distingue deux types qui l'un et l'autre sont améliorés par l'utilisation du système selon l'invention :

- le système de mesure du type bistatique où l'antenne réceptrice est distincte de l'antenne émettrice.

- le système de mesure du type monostatique où une même antenne fonctionne successivement comme émetteur et comme récepteur.

Les stations du type monostatique utilisent généralement trois antennes; elles sont dites alors du type "trimono-statique", où chaque antenne, généralement parabolique, est repérée par le site et l'azimuth de son axe d'émission. L'ensemble des trois antennes détermine alors un système de coordonnées précis dans lequel sont repérées les trois composantes du vecteur de vitesse du fluide, chaque composante étant mesurée selon l'axe des antennes. La valeur d'une composante est donnée après analyse du signal capté, par la mesure du "glissement" de fréquence qui affecte la fréquence de l'onde émise : si Fo désigne celle-ci, la fréquence de l'onde diffusée sera : $F_o + \Delta F_d$ où la "composante Doppler" $\Delta F_d$, ou glissement de fréquence, est donnée par :

$$\frac{\Delta F_d}{F_o} = 2 \times \frac{V}{C}$$

où C et V désignent respectivement la célérité du son dans le fluide et la composante de la vitesse à mesurer.

Les problèmes essentiels posés par une telle mesure consistent à identifier la composante Doppler réelle compte-tenu, d'une part, du faible niveau réfléchi et d'autre part, de la présence de bruit parasite, au voisinage de la fréquence d'émission, qui va "biaiser" la valeur brute du glissement de fréquence : la valeur mesurée $\Delta F_m$ étant alors inférieure à la valeur de la composante Doppler réelle $\Delta F_d$.

Les techniques d'exploitation d'un tel signal sont très variées. Parmi celles-ci notons la méthode de l'analyse spectrale par transformée de Fourier rapide, la technique des filtres adjacents nombreux à bandes passantes fines et couvrant l'ensemble de la bande passante utile, la technique du passage à zéro, la technique du "phase lock" ... Mais ces méthodes ne donnent pas satisfaction parce qu'elles sont généralement lourdes, imprécises et peu fiables. En particulier, la méthode d'analyse spectrale nécessite un échantillonnage fin d'où un temps de calcul important difficilement compatible avec une mesure en temps réel. La méthode des filtres adjacents est peu fiable et d'autre part les filtres successifs sont difficiles à mettre en oeuvre; quant à la technique du "passage à zéro", bien que simple d'emploi, elle ne donnait jusqu'à présent que des résultats médiocres car fortement faussée par la présence de bruits de fond.

La présente invention remédie à ces inconvénients en constituant un système de traitement du signal à partir d'une technique connue d'exploitation du signal combinée à un ensemble de tests ou de critères de validation qui permet de valider ou d'invalider en temps réel la mesure de fréquence du signal et d'afficher immédiatement les trois composantes de la vitesse.

Sur la base de cette technique on opère une mesure sur un nombre prédéterminé de périodes. Cette mesure est validée ou invalidée à partir de critères qui reposent sur le franchissement de seuils dans des intervalles de temps limités. Ces critères sont effectués d'une part, à l'échelle de chaque période, sur les intervalles de temps séparant le franchissement soit de deux seuils soit du même seuil deux fois de suite dans le même sens, d'autre part sur la différence de temps de franchissement de seuils entre le début et la fin du nombre de périodes prédéterminé.

Le résultat brut obtenu au niveau de chaque mesure est toutefois fortement biaisé par la présence de bruits de fond. Etant donné que l'on connaît les caractéristiques du signal utile (signal à bande étroite) et du bruit de fond (signal à bande large dont la densité spectrale est sensiblement linéaire au voisinage de la bande considérée), on peut calculer la loi statistique de la différence entre la valeur de la mesure brute et de la valeur réelle.

Un procédé nouveau permettant l'estimation des termes intervenant dans la correction qui en résulte, est une autre caractéristique importante de l'invention. Les termes intervenant dans cette correction sont en particulier les valeurs efficaces du signal et du bruit de fond dans des bandes de fréquences voisines de la fréquence d'émission. Plus précisément la correction permettant d'obtenir le glissement réel de fréquence consiste en l'application d'un facteur sur le glissement brut mesuré, égal au rapport des puissances efficaces du bruit et du signal.

Dans un mode de réalisation préféré le signal global capté par l'antenne est transformé par un transducteur en un signal électrique analogique qui après un conditionnement préalable, est dérivé dans deux circuits en parallèle comportant chacun un système de filtrage associé à des fonctions électroniques classiques.

Le premier système de filtrage appelé "filtre de travail"
est centré sur la fréquence d'émission. Sa largeur de
bande relative $\Delta F/F_o$ est de l'ordre de 10%; cette
bande est dénommée "bande de travail". La mesure élémentaire de fréquence s'effectue à partir du signal prélevé en sortie de "filtre de travail" selon la technique classique du passage à zéro. Le signal est soumis
à un comptage de périodes au moyen d'une base de temps
précise dont le déclenchement s'opère après franchissement du seuil bas. Celui-ci est déterminé au préalable
relativement à l'écart-type du bruit de fond électronique de l'appareillage. Il participe en outre aux
critères de validation selon l'invention. Chaque période
du signal est validée en fonction de l'intervalle de
temps maximal séparant le franchissement entre le
seuil bas et un seuil haut; ce dernier est déterminé
relativement à l'écart-type du bruit de fond acoustique;
sa valeur est avantageusement pilotée en temps réel
par la mesure simultanée du niveau de bruit acoustique.
Cet intervalle de temps de franchissement doit correspondre, à une certaine tolérance près, à une fraction
de la période du signal d'émission.

Deux autres critères possibles utilisent de façon analogue les intervalles de temps qui doivent correspondre
aux franchissements successifs d'un même type de seuil,
soit du seuil bas, soit du seuil haut. Comme le précédent, ces intervalles peuvent être prédéterminés et
affichés dans une mémoire.

Enfin un quatrième critère est l'intervalle de temps que
ne doit pas dépasser, en tenant compte d'une tolérance
due à l'effet Doppler, un nombre déterminé de périodes
du signal rétrodiffusé par exemple 5 périodes.

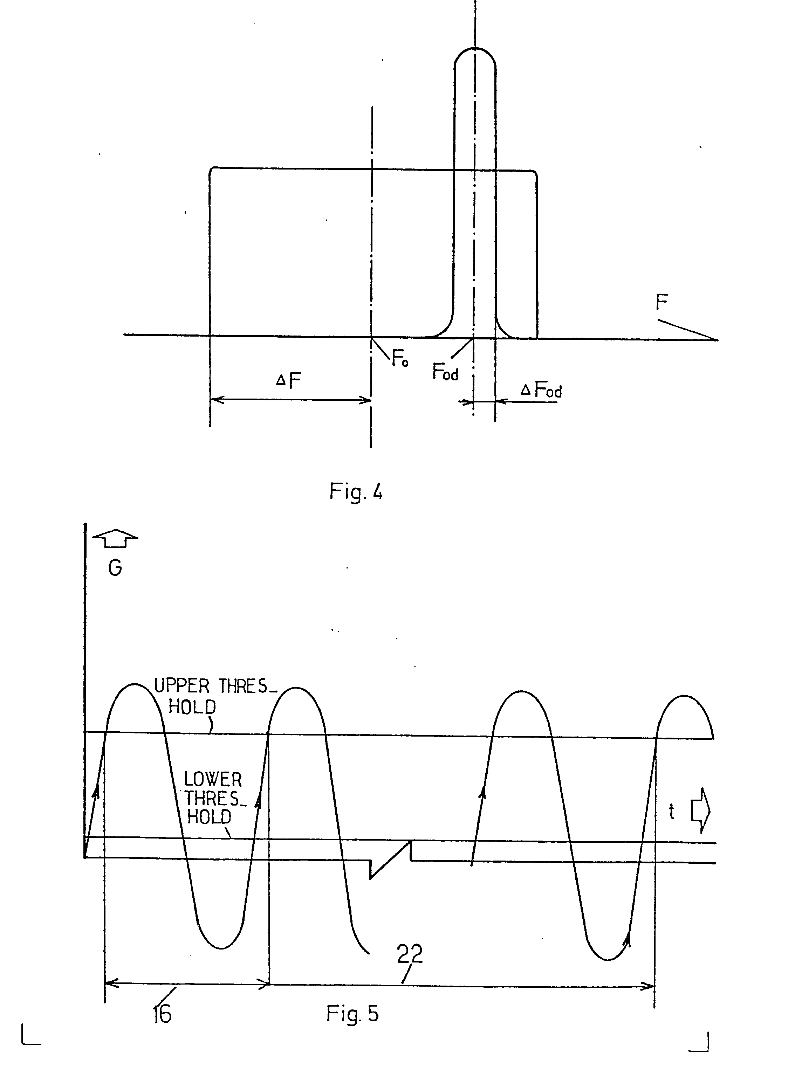

La figure 5 est une représentation des critères de validation appliqués à la mesure de la fréquence du signal;

un des tests de validation sur une période étant représenté ici par 16, le test sur un nombre prédéterminé de
périodes étant représenté par 22.

En parallèle à cette mesure de fréquence, le même signal,
en sortie de ce "filtre de travail", est dérivé dans
une branche comportant en série amplificateur redresseur
et intégrateur et qui donne une grandeur analogique
fonction de la valeur efficace $V_F(S)$ du signal S dans
la bande passante de travail et de celle $V_F(B)$ du
bruit de fond (B) dans la même bande avec :
$V_F(B+S) = \sqrt{P(B+S)}$; en appelant P la puissance efficace,
mesurée par le carré de la valeur efficace $V_F$
correspondante.

Avec l'hypothèse justifiée que le bruit de fond acoustique B et le signal utile S (porteur de la composante
Doppler) sont pratiquement décorrellés, on a approximativement :
$$P(B+S) = P(B) + P(S)$$

Le second système de filtrage équipé du "filtre d'estimation de bruit" donne une grandeur analogique proportionnelle à la valeur efficace du signal dans la bande
passante du filtre dite "bande d'estimation du bruit"
soit dans le cas général :
$$V_F(B' + S') = \sqrt{P(B' + S')}$$

Avec la même hypothèse que précédemment on a approximativement;  $P(B'+S') = P(B') + P(S')$
avec $P(S')$ = puissance efficace du signal reçu dans la
bande "d'estimation de bruit".

$P(B')$ = puissance efficace du bruit de fond acoustique
reçu dans la bande "d'estimation de bruit".

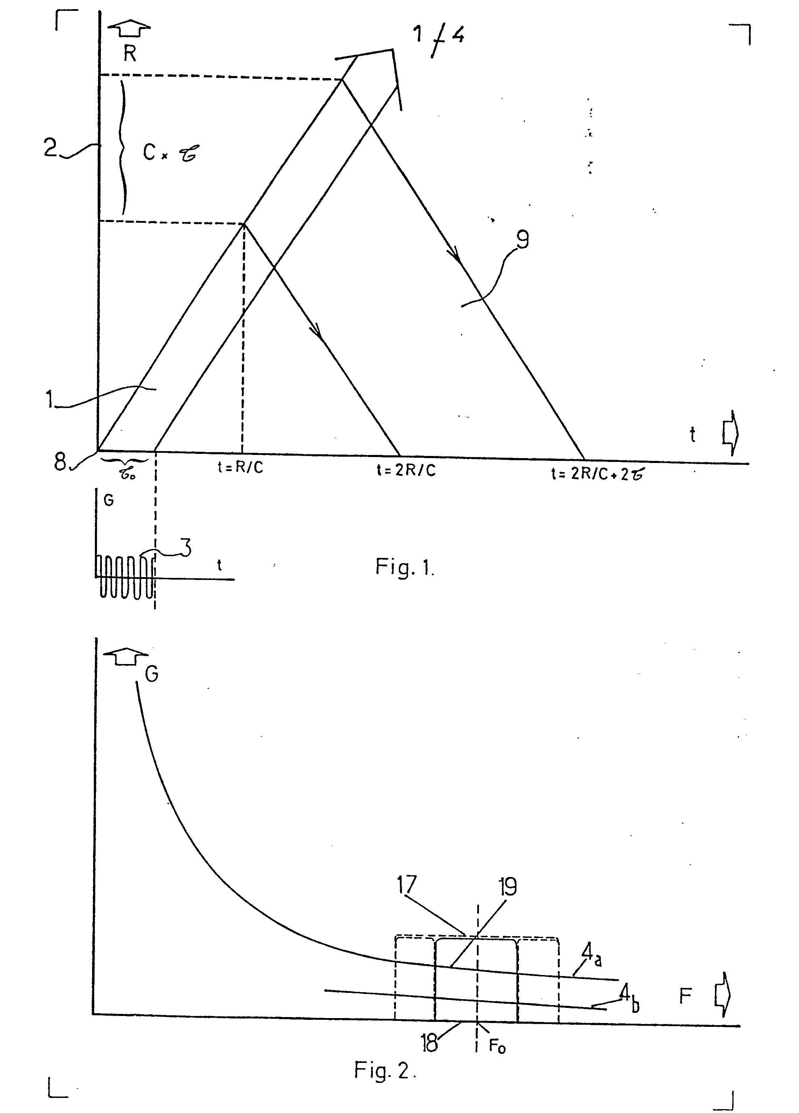

Ces grandeurs sont en relation directe avec celles mesurées par le "filtre de travail" car on a constaté
(figure 2) une évolution sensiblement linéaire décrois-

sante du bruit de fond aérien, relativement à la fréquence, dans une bande de fréquence suffisamment large au voisinage de la fréquence d'émission. En pratique, cette évolution se traduit par :

$$V_F (B') \neq \lambda V_F (B)$$

d'où

$$P (B') \neq \lambda^2 P (B)$$

$\lambda$ étant voisin du rapport des largeurs des bandes passantes respectives du "filtre d'estimation de bruit" et du "filtre de travail".

De même les valeurs efficaces $V_F (S')$ et $V_F (S)$ mesurées dans les bandes d'estimation de bruit et de travail sont dans un rapport $\mu$ dont les valeurs dépendent comme suit du choix de la bande d'estimation de bruit :

$\alpha$ ) <u>dans une première version</u>

la bande passante du "filtre d'estimation de bruit" recouvre la bande passante "de travail" en étant plus large que celle-ci. Dans ce cas : $\mu = 1$ ($\mu > 0$ dans le cas général)

$\beta$ ) <u>dans une seconde version</u>

la bande passante "d'estimation de bruit" est sensiblement adjacente à celle "de travail".
Dans ce cas : $\mu = 0$ car $P (S') = 0$

$\gamma$ ) <u>dans une troisième version</u>

la bande passante "d'estimation de bruit" est constituée par deux bandes de fréquence restreintes situées au voisinage et de part et d'autre de la bande passante "de travail".
Dans ce cas on a : $\mu = 0$ car $P(S') = 0$.

Ces informations numérisées par un système classique de conversion analogique/digitale sont transférées, le moment voulu, dans un microcalculateur. Celui-ci effectue une évaluation du rapport $P (B) / P (S)$ dans la bande de fréquence "de travail" par une résolution classique

du système linéaire :

$$P(B) + P(S) = P(B+S)$$
$$\lambda^2 P(B) + \mu P(S) = P(B' + S')$$

Compte tenu des hypothèses précédentes et en particulier des caractéristiques du signal diffusé, schématisées sur la figure 4, à savoir : signal à bande étroite :

$$\frac{\Delta F_o d}{F_o d} \approx \frac{\Delta F_o d}{F_o} \approx 1\%$$

situé dans une bande passante principale $2\Delta F$ telle que :

$$\frac{\Delta F}{F_o} \approx 10\%$$

Le calcul du glissement réel de fréquence du signal utile ou composante Doppler se fait alors en première approximation selon l'algorithme :

$$\Delta F_d = \Delta F_m \left(1 + \frac{P(B)}{P(S)}\right)$$

la vitesse se calculant suivant l'expression classique précitée :

$$\frac{\Delta F_d}{F_o} = \frac{2V}{C}$$

On notera que la "bande passante" de travail $2\Delta F$ est choisie de telle manière qu'elle permette de mesurer toutes les vitesses de vent situées dans une plage fixée $\Delta V$ soit telle que :

$$\frac{\Delta F}{F_o} > \approx \frac{2\Delta V}{C}$$

L'invention sera précisée à l'aide du complément de description qui va suivre, qui se réfère aux dessins annexés et se rapporte plus particulièrement à un exemple de mise en oeuvre de l'invention destiné à mesurer à la vitesse du vent.

La figure 1 représente un diagramme spatio-temporel de propagation d'une impulsion acoustique.

La figure 2 est une représentation d'une évolution type du bruit de fond acoustique et électronique en fonction de la fréquence sur laquelle est située la position relative des bandes passantes du "filtre de travail" et du "filtre d'estimation de bruit".

La figure 3 est un bloc diagramme de l'ensemble du système de télédétection acoustique.

Les figures 4 et 5 ont été citées plus haut.

La figure 6 est un schéma fonctionnel de la chaîne de traitement de signal.

Le diagramme spatio-temporel de la figure 1 correspond à l'émission d'un pinceau d'ondes sonores 1 à une fréquence déterminée très stable; celles-ci sont diffusées par la turbulence qui affecte les différentes couches de fluide atteintes par le signal. La fréquence d'émission utilisée est choisie en fonction de la distance R d'exploration retenue, ainsi que du fluide mesuré. Elle peut être par exemple de 2000 Hz dans l'atmosphère et 10000 Hz dans l'eau. La résolution spatiale ou profondeur d'exploration, est déterminée par la durée $\tau_o$ de l'impulsion sonore d'amplitude A.

Une faible partie de l'onde émise 1 est diffusée en direction de l'antenne 8 et est captée après un intervalle de temps correspondant au temps requis par les ondes sonores 1 pour parcourir la somme des distances telles que R séparant l'émission 1 et l'antenne 8 de la zone diffusante 2.

Les signaux diffusés à différentes distances, et ici en particulier à différentes altitudes s'échelonnent dans le temps, au niveau de la réception, selon un ordre correspondant aux distances croissantes des zones turbulentes rencontrées, à partir d'un instant :

$\frac{2R}{C}$ fixé par le microcalculateur, sur un intervalle de temps $2\tau$ donné, comme représenté sur le diagramme.

Sur la figure 2 est représentée une évolution type de la densité spectrale du bruit de fond acoustique 4a et électronique 4b en fonction de la fréquence. Sur cette même figure, on a représenté la position de la "bande de travail" 18 centrée sensiblement sur la fréquence d'émission $F_o$ et en pointillé les différentes positions possibles de la "bande d'estimation de bruit" 17.

Ces deux bandes de fréquences 18 et 17 sont complémentaires et couvrent une bande de fréquence quasi continue dans la zone d'évolution sensiblement linéaire 19 du bruit de fond acoustique.

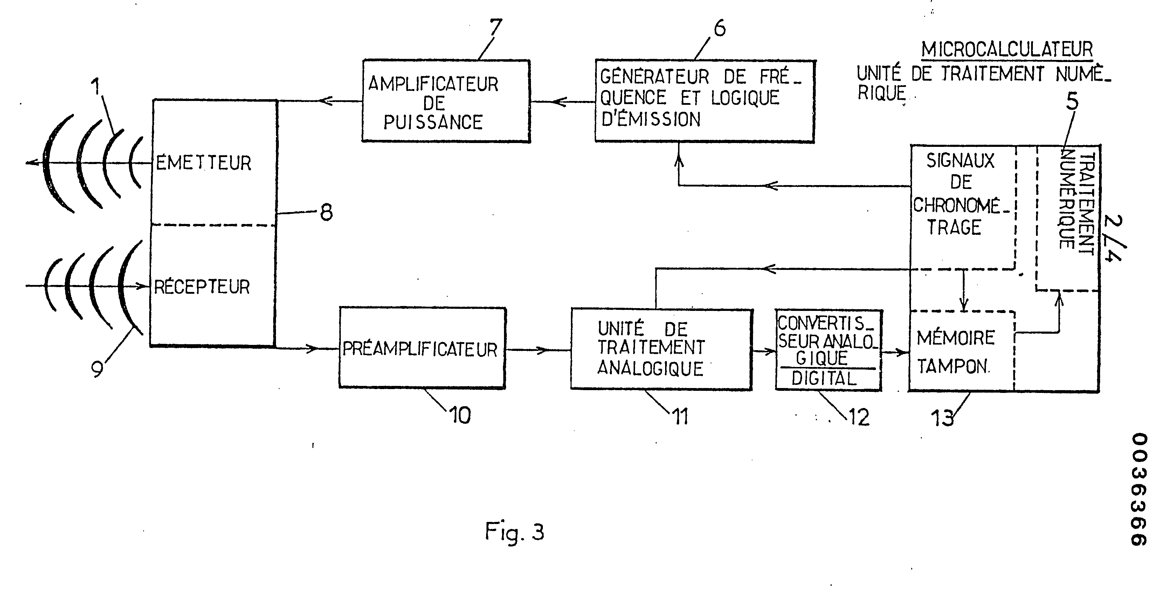

La figure 3 représente le bloc-diagramme d'un système de télédétection acoustique. La transmission du signal acoustique est réalisée par une chaîne d'émission comprenant à l'amont un générateur 6 de fréquence électronique stable du type oscillateur à cristal par exemple. Chaque train d'ondes émis 3 est initialisé par un signal issu du microcalculateur 5 et sa durée $\tau_o$ est déterminée par une logique d'émission intégrée dans le système de génération de fréquence 6. Le signal ainsi délivré à une fréquence donnée très stable, est amplifié dans un amplificateur de puissance 7 avant d'exciter une chambre de compression, située au foyer d'une antenne 8, qui génère les ondes sonores 1.

A la réception, le signal acoustique diffusé 9 est transformé par un capteur, tel qu'un microphone, ou par la membrane de la même chambre de compression, en un signal électrique analogique qui est soumis à une pré-amplification dans un transformateur préamplificateur 10. Ce signal analogique global, porteur du bruit de fond et de la composante Doppler, est ensuite analysé dans une unité de traitement analogique 11 qui donne en continu des informations analogiques sur les caractéristiques du signal 9 capté, telles que : fréquence et valeur efficace selon des modalités qui font partie de l'invention et seront détaillées plus loin. Ces informations sont transformées par un convertisseur analogique/numérique 12 et stockées dans une mémoire "tampon" du microcalculateur 5 avant d'être transférées, le moment voulu, dans l'unité de traitement numérique de ce microcalculateur 5 qui effectuera, sur ces valeurs, un certain nombre d'opérations élémentaires programmées.

Les différents ordres de commande du microcalculateur 5, à l'ensemble du système de mesure sont symbolisés par des liaisons 14 et en particulier les signaux de chronométrage.

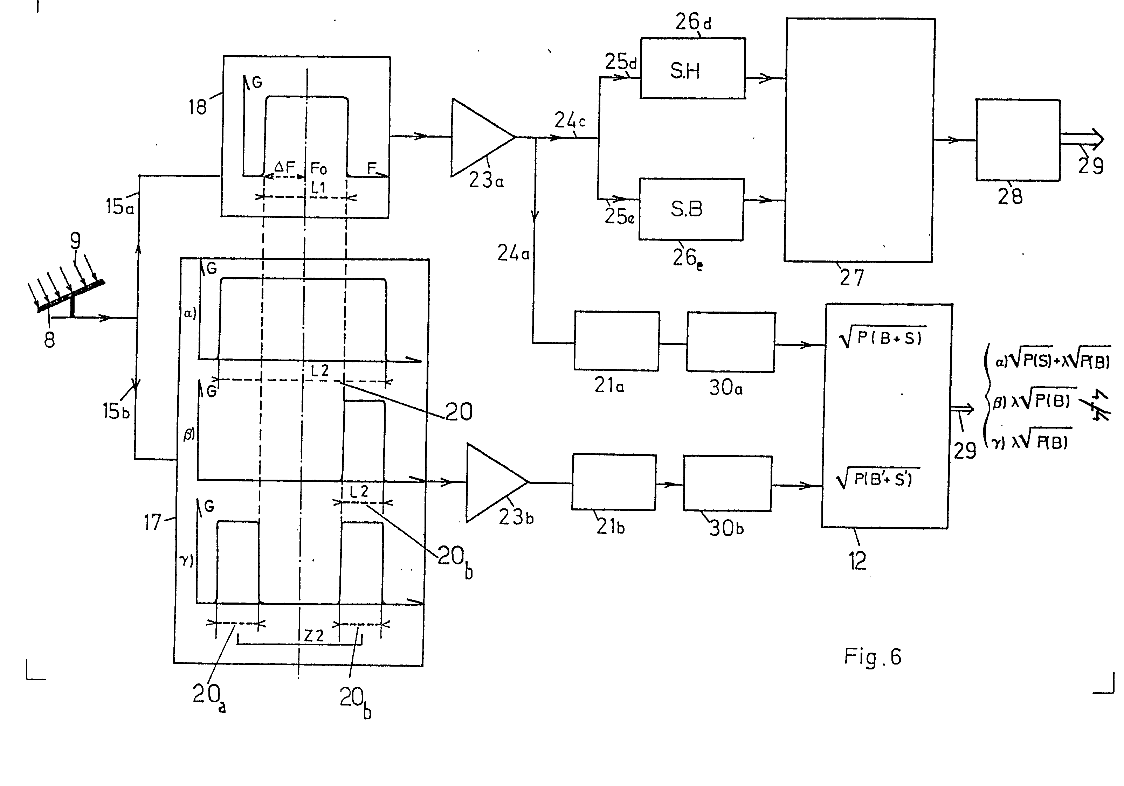

La figure 6 est le schéma fonctionnel de l'ensemble de la chaîne de traitement du signal selon l'invention.

Ce signal en sortie de l'antenne 8 est dérivé dans deux circuits en parallèle 15a et 15b qui comportent respectivement, disposés en série : un système de filtrage 18 et 17, un amplificateur 23a, 23b, un redresseur 21a et 21b et un intégrateur 30a et 30b.

Dans le circuit 15a la bande passante de largeur $L_1$ du filtre 18 appelé "filtre de travail" est centrée sur la fréquence d'émission $F_o$. Dans le circuit 15b le filtre 17 appelé "filtre d'estimation de bruit" est représenté dans les trois versions possibles,selon que sa bande

passante 20 est :

$\alpha$ ) centrée sur la fréquence d'émission $F_o$ avec une largeur de bande $L_2$ plus grande que $L_1$.

$\beta$ ) adjacente à la bande passante du "filtre de travail" 18 dans cette version, il existe une autre configuration possible, non figurée, qui serait symétrique, par rapport à la bande passante du "filtre de travail" 18a de celle qui est représentée.

$\gamma$ ) constituée de deux bandes disjointes 20a et 20b situées symétriquement par rapport à la bande passante du "filtre de travail" 18a et adjacentes à celle-ci.

Le signal électrique analogique en sortie de l'amplificateur 23a, compris dans la bande de fréquences : $F_o \pm \Delta F$ du "filtre de travail" 18 est dérivé dans deux branches en parallèle 24a et 24c.

Dans la branche de dérivation 24a, le signal électrique ainsi filtré passe successivement dans un redresseur 21a et un intégrateur 30a.

En sortie des intégrateurs 30a et 30b on dispose de grandeurs proportionnelles aux valeurs efficaces du signal reçu, dans les bandes passantes respectives du "filtre de travail" et du "filtre d'estimation de bruit" 17.

Ces valeurs analogiques sont transformées, dans le convertisseur analogique/numérique 12, en valeurs numériques pour chacun des niveaux ou tranches d'altitude analysés, puis stockées dans les adresses correspondantes d'une mémoire tampon du microcalculateur 5 avant d'être transférées, le moment voulu dans l'unité de traitement numérique de ce microcalculateur 5. En parallèle à cette mesure, effectuée sur la branche de dérivation 24a, le signal issu du "filtre de travail" 18 est analysé période par période dans la branche de dérivation 24c. Le signal ainsi filtré dans la bande: $F_o \pm \Delta F$ porteur de la composante Doppler est dérivé dans deux lignes 25d et 25e comportant chacune un comparateur de seuil ou de niveau 26d et 26e. Lorsque l'amplitude du signal dépasse la valeur affichée par le comparateur de seuil bas S.B. 26e celui-ci déclenche un compteur de périodes 28 par l'intermédiaire d'un compteur d'impulsions intégré dans un système de chronométrage 27 à double entrée qui comprend une logique de comptage.

La seconde entrée du système de chronométrage 27 est en relation avec le comparateur à seuil haut S.H. 26d qui renseigne celui-ci sur la poursuite où l'arrêt du comptage des impulsions selon la valeur de l'amplitude du signal par rapport au seuil haut S.H. 26d prédéterminé.

Le nombre de périodes validées au moyen des critères décrits précédemment, ainsi que le nombre d'impulsions correspondantes sont transformés en informations binaires par le convertisseur analogique numérique 12 et stockés dans la mémoire tampon avant d'être transférés dans l'unité de calcul de microcalculateur 5.

On dispose ainsi de la totalité des informations donnant à la fois le nombre de périodes valides successives ainsi que l'intervalle de temps correspondant à leur établissement, la valeur efficace du signal porteur de la composante Doppler et du signal issu du filtre d'estimation de bruit.

Les informations issues du "filtre d'estimation de bruit" 17 soit P (B' + S') sont respectivement identifiées dans le microcalculateur 5 à :

$$\sqrt{P(S)} + \lambda\sqrt{P(B)} \qquad \text{dans la configuration } 17\alpha$$

$$\lambda\sqrt{P(B)} \qquad \text{dans la configuration } 17\beta$$

$$\lambda\sqrt{P(B)} \qquad \text{dans la configuration } 17\gamma$$

avec $\quad \lambda = \dfrac{L_2}{L_1}$

Le transfert de ces informations vers le microcalculateur 5 est symbolisé par la liaison 29. Le microcalculateur 5 peut alors effectuer les calculs sur ces valeurs selon les algorithmes décrits plus haut.

REVENDICATIONS DE BREVET

1. Système de mesure à distance des vitesses relatives au sein d'un fluide en mouvement, en particulier de l'eau et de l'air et comportant une émission de trains d'ondes acoustiques selon au moins une direction déterminée :

- une réception des ondes diffusées en particulier par la turbulence à distance de l'émission.

- une mesure de la fréquence des ondes reçues.

- une détermination du glissement de fréquence, égal à la différence des fréquences émises et reçues.

- une évaluation de la composante de vitesse du fluide par la formule de DOPPLER.

- caractérisé par une mesure de fréquence globale dans une bande passante dite "de travail" sensiblement centrée sur la fréquence d'émission et par une estimation simultanée du rapport entre les puissances du bruit de fond et du signal utile captés, ce qui permet de corriger cette mesure globale.

2. Système selon la revendication 1 où la mesure de fréquence globale est réalisée selon la méthode classique du passage à zéro, caractérisé par une validation période par période de ladite mesure de fréquence.

3. Système selon la revendication 2, caractérisé en ce que la validation période par période est conditionnée par un intervalle de temps qui sépare le franchissement successif d'un seuil bas et d'un seuil haut.

2

4. Système selon l'une des revendications 2 ou 3, caractérisé en ce que la validation période par période est conditionnée par un intervalle de temps qui sépare le franchissement successif d'un même seuil dans le même sens.

5. Système selon l'une des revendications 3 ou 4 caractérisé en ce que la valeur du seuil bas est de l'ordre de grandeur de l'écart-type du bruit de fond électronique.

6. Système selon l'une des revendications 3 à 5, caractérisé en ce que la valeur du seuil haut est de l'ordre de grandeur de l'écart-type du bruit de fond acoustique dans la bande "de travail".

7. Système selon l'une des revendications 1 à 6, caractérisé par une validation de la mesure de fréquence, conditionnée par un intervalle de temps séparant le franchissement d'un même seuil, dans le même sens, sur un nombre global fixé de périodes.

8. Système selon l'une des revendications 1 à 7, caractérisé en ce que l'estimation du rapport entre les puissances du bruit et du signal captés dans la bande "de travail" est faite par l'intermédiaire d'une mesure simultanée dans une bande de fréquence complémentaire, dite "d'estimation du bruit".

9. Système selon la revendication 8, caractérisé en ce que la bande "d'estimation de bruit" recouvre la bande "de travail", en étant plus large que celle-ci.

10. Système selon la revendication 8, caractérisé en ce que la bande "d'estimation de bruit" est adjacente à la bande "de travail" ou à son proche voisinage.

11. Système selon la revendication 10, caractérisé en ce que la bande "d'estimation de bruit" se compose de deux bandes passantes adjacentes à la bande "de travail", ou à son voisinage de part et d'autre de celle-ci.

12. Système selon l'une des revendications 8 à 11, caractérisé en ce que la valeur efficace des ondes reçues dans la bande passante "d'estimation de bruit" est identifiée au produit de la valeur efficace du bruit de fond acoustique dans la bande passante "de travail" par un facteur voisin du rapport des largeurs des bandes passantes "d'estimation de bruit" et "de travail".

13. Système selon l'une des revendications 1 à 12 caractérisé en ce que la correction permettant d'obtenir le glissement réel de fréquence, à partir de la valeur du glissement brut, consiste en l'application d'un facteur multiplicatif sur le glissement brut mesuré égal au rapport des puissances efficaces du bruit et du signal dans la "bande de travail".

14. Appareil pour la mise en oeuvre du système selon l'une des revendications 1 à 13, caractérisé par une chaîne de traitement du signal comportant les éléments suivants :

- une antenne réceptrice captant les ondes diffusées, équipée d'un transducteur délivrant un signal électrique, associé à un préamplificateur,

- une unité de traitement de ce signal, comportant, dans chacun de deux circuits en parallèle, un système de filtrage associé en série à des éléments tels que amplificateur, redresseur et intégrateur, le premier circuit équipé d'un filtre passe-bande centré sur la fréquence d'émission, appelé "filtre de travail", le second circuit équipé d'au moins un filtre passe-bande appelé "filtre d'estimation de bruit"

- un estimateur des puissances transmises à travers chacun des circuits,

- un système de comptage des périodes du signal, sur une dérivation du premier circuit, "de travail"

- une mémoire tampon dans laquelle ces données sont stockées,

- une unité de traitement numérique de ces données calculant la valeur corrigée de la vitesse du fluide à distance de l'appareil.

15. Appareil selon la revendication 14 rattachée à l'une des revendications 2 à 13, caractérisé en ce que le système de comptage de périodes est réalisé par un système de chronométrage associé à :

- un comparateur de niveau à seuil bas qui déclenche le chronométrage.

- un comparateur de niveau à seuil haut qui renseigne le système de chronométrage.

- au moins une mémoire de validation conservant la valeur de l'intervalle de temps pendant lequel doit s'effectuer le chronométrage entre deux comparaisons de niveau.

16. Appareil selon la revendication 14, caractérisé en ce que la bande passante du "filtre d'estimation de bruit"

5

couvre avec la bande passante du "filtre de travail" une bande de fréquence quasi continue à l'intérieur des limites de laquelle le rapport des largeurs de bande de ces deux filtres est voisin du rapport de la densité spectrale du bruit dans les bandes considérées; la bande passante du "filtre de travail" sensiblement centrée sur la fréquence d'émission $F_o$ couvrant à l'intérieur de ces limites une plage de fréquences $2 \Delta F$ telle que :

$$\frac{\Delta F}{F_o} > \frac{2 \Delta V}{C}$$

où $\Delta V$ désigne la plage des vitesses de vent que l'on veut mesurer.

Fig. 1.

Fig. 2.

Fig. 3

$F_0$

$F_{od}$

$\Delta F$

$\Delta F_{od}$

F

Fig. 4

G

UPPER THRES_
HOLD

LOWER
THRES_
HOLD

t

22

16

Fig. 5

Fig.6

0036366

Office européen
des brevets

**RAPPORT DE RECHERCHE EUROPEENNE**

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendica-tion concernée | |
| | US - A - 4 114 136 (J.M. D'ALBORA)<br>  * Colonne 2, ligne 20 - colon-<br>  ne 4, ligne 47; figure unique *<br><br>  -- | 1,14 | G 01 S 15/88<br>15/58 |
| | US - A - 3 204 119 (J.W. GRAY)<br>  * Colonne 1, lignes 8-62 *<br><br>  -- | 1,8 | |
| | L'ONDE ELECTRIQUE, vol. 50, no. 5,<br>mai 1970<br>Paris, FR<br>P. PERONNEAU et al.: "Vélocimètre<br>sanguin par effet Doppler à<br>émission ultra-sonore pulsée", pa-<br>ges 369-389<br>  * Pages 375 et 376, la para-<br>  graphe 3-3-2.2. "Réponse du<br>  fréquence-mètre" *<br><br>  -- | 1 | DOMAINES TECHNIQUES RECHERCHES (Int. Cl.³)<br><br>G 01 S<br>G 01 P |
| | US - A - 3 743 420 (P. ITEN et al.)<br>  * Colonne 3, lignes 25-60;<br>  figure 1 *<br><br>  -- | 2,15 | |
| A | FR - A - 2 428 260 (P.E. RAVUSSIN)<br>  * Le document en entier *<br><br>  ---- | 1,14 | CATEGORIE DES DOCUMENTS CITES |

CATEGORIE DES DOCUMENTS CITES

X: particulièrement pertinent
A: arrière-plan technologique
O: divulgation non-écrite
P: document intercalaire
T: théorie ou principe à la base
   de l'invention
E: demande faisant interférence
D: document cité dans
   la demande
L: document cité pour d'autres
   raisons

&: membre de la même famille,
   document correspondant

| | | |
|---|---|---|
| X | Le présent rapport de recherche a été établi pour toutes les revendications | |
| Lieu de la recherche<br>La Haye | Date d'achèvement de la recherche<br>03-06-1981 | Examinateur<br>VAN WEEL |

OEB Form 1503.1   06.78